# EUROPÄISCHE PATENTSCHRIFT

(11) **EP 3 460 281 B1**
(45) Veröffentlichungstag und Bekanntmachung des Hinweises auf die Patenterteilung: **06.11.2019**
(21) Anmeldenummer: 17192041.6
(22) Anmeldetag: 20.09.2017
(51) Int. Cl.: F16D 43/206

(54) **DREHMOMENTBEGRENZUNGSKUPPLUNG**
TORQUE LIMITING COUPLING
ACCOUPLEMENT À LIMITATION DE COUPLE

(43) Veröffentlichungstag der Anmeldung: 27.03.2019
(73) Patentinhaber: Walterscheid GmbH, 53797 Lohmar (DE)
(72) Erfinder: HÖCK, Andreas, 53797 Lohmar (DE); HECTOR, Martin, 53721 Siegburg (DE); LITTAU, Matthias, 53347 Alfter (DE)
(74) Vertreter: Neumann Müller Oberwalleney & Partner Patentanwälte

(56) Entgegenhaltungen:
- DE-A1- 10 201 988
- DE-C1- 19 611 622

## Beschreibung

Die Erfindung betrifft eine Drehmomentbegrenzungskupplung, die um eine Längsachse drehbar angeordnet ist. Die Drehmomentbegrenzungskupplung weist eine Kupplungsnabe auf, die umfangsverteilte Durchbrüche aufweist. Mitnehmerkörper sind parallel zur Längsachse verstellbar in den Durchbrüchen der Kupplungsnabe gehalten. Eine Kupplungshülse weist zu den Durchbrüchen korrespondierende erste Ausnehmungen auf. Eine Schaltscheibe ist zwischen einer Einkuppelposition und einer Auskuppelposition relativ zur Kupplungsnabe drehbar angeordnet. Die Schaltscheibe weist zu den Durchbrüchen korrespondierende zweite Ausnehmungen auf, in welche die Mitnehmerkörper in der Auskuppelposition eingreifen, wobei bei Überschreiten eines vorgegebenen Grenzdrehmoments durch eine Abrollbewegung der Mitnehmerkörper die Schaltscheibe aus der Einkuppelposition in die Auskuppelposition überführbar ist. Erste Federmittel beaufschlagen die Schaltscheibe axial, wobei bei Drehmomentübertragung zwischen der Kupplungsnabe und der Kupplungshülse die Mitnehmerkörper von der Schaltscheibe gegen die Kupplungshülse beaufschlagt werden und in der Einkuppelposition zur Drehmomentübertragung in den ersten Ausnehmungen gehalten sind. Zweite Federmittel beaufschlagen die Schaltscheibe in Umfangsrichtung zur Einnahme der Einkuppelposition. Die Drehmomentbegrenzungskupplung weist ferner zumindest ein Sperrelement auf, das zwischen einer Sperrposition und einer Löseposition verstellbar ist und in Richtung zur Sperrposition kraftbeaufschlagt ist, wobei das Sperrelement in der Auskuppelposition der Schaltscheibe in die Sperrposition überführbar ist, in der das Sperrelement in Umfangsrichtung gegen die Kupplungsnabe und gegen die Schaltscheibe abgestützt ist und die Schaltscheibe gegen Drehung relativ zur Kupplungsnabe sperrt.

Eine solche Drehmomentbegrenzungskupplung ist aus der DE 28 53 293 C2 bekannt.

Das Sperrelement dient dazu, die Schaltscheibe nach dessen Überführung in die Auskuppelposition zu halten, um zu vermeiden, dass die Schaltscheibe selbstständig in die Einkuppelposition überführt wird. Dadurch wird in der Auskuppelposition vermieden, dass die Kugeln beim Passieren der ersten Ausnehmungen in der Kupplungshülse in diese gedrückt werden. Hierdurch werden Geräusche in der Auskuppelposition vermieden und die Lebensdauer der Drehmomentbegrenzungskupplung erhöht. Ferner wird vermieden, dass die Drehmomentbegrenzungskupplung automatisch wieder einschaltet, wenn das Grenzdrehmoment unterschritten wird. Für das Wiedereinschalten der Drehmomentbegrenzungskupplung ist ein aktives Betätigen einer Person erforderlich.

Eine andere Drehmomentbegrenzungskupplung zeigt die DE 31 51 485 C1. Diese beschreibt eine Überlastkupplung zum Schutz von Antriebssträngen, mit einem treibenden und einem getriebenen Kupplungsteil. Das eine Kupplungsteil kann als Kupplungsnabe ausgebildet sein und umfangsverteilte Durchbrüche aufweisen, in denen als Mitnehmerkörper wirkende Wälzkörper gehalten sind, die zur Drehmomentübertragung in Ausnehmungen des anderen Kupplungsteils eingreifen. Die Überlastkupplung weist ferner einen in der Drehmomentübertragungsposition durch in Umfangsrichtung wirkende Federn winkelversetzt zum anderen Kupplungsteil gehaltenen Schaltring auf. Der Schaltring ist mit zu den Ausnehmungen des anderen Kupplungsteils korrespondierenden Ausnehmungen versehen. Die Mitnehmerkörper stützen sich bei Drehmomentübertragung über den Schaltring gegen die Kraft einer zwischen zwei Anschlägen gehaltenen Axialfeder ab. Der Schaltring ist bei Überschreitung eines vorgegebenen Nennmomentes durch eine Abrollbewegung der Mitnehmerkörper aus den Ausnehmungen des anderen Kupplungsteils heraus gegen die Kraft der in Umfangsrichtung wirkenden Feder derart verdrehbar, dass die Ausnehmungen des Schaltringes zu den Durchbrüchen in eine korrespondierende Winkelstellung verstellbar sind.

Andere Drehmomentbegrenzungskupplungen sind in den Dokumenten DE 102 01 988 A1 und DE 196 11 622 C1 gezeigt.

Um zu gewährleisten, dass die Überlastkupplung unabhängig von dem Auftreten von Drehschwingungen erst bei Überschreiten eines vorgegebenen Nenndrehmomentes freischaltet, ist in dem als Kupplungsnabe ausgebildeten Kupplungsteil mindestens ein Sicherungsstift axial begrenzt beweglich geführt. Der Sicherungsstift ist von der Kraft einer Feder an der dem Schaltring zugewandten Seite aus der Kupplungsnabe vorstehend gehalten. Am Schaltring ist eine in der Drehmomentübertragungsposition mit dem Sicherungsstift fluchtende Ausnehmung vorgesehen, in die der Sicherungsstift eintaucht und so den Schaltring in der Drehmomentübertragungsposition hält, bis das Nenndrehmoment überschritten wird. Das Wiedereinschalten der Überlastkupplung von der Freigangposition in die Drehmomentübertragungsposition durch einfaches Absenken der Antriebsdrehzahl soll durch die angegebenen Maßnahmen nicht behindert werden.

Aufgabe der vorliegenden Erfindung ist es, eine Drehmomentbegrenzungskupplung bereitzustellen, die zum einen sicherstellt, dass ein Wiedereinschalten nur durch ein aktives Betätigen einer Person möglich ist. Zum anderen soll sichergestellt sein, dass bei Auftreten von Drehschwingungen ein ungewolltes Freischalten der Drehmomentbegrenzungskupplung vermieden wird, wenn ein vorgegebenes Grenzdrehmoment noch nicht erreicht bzw. noch nicht überschritten wurde.

Die Aufgabe wird erfindungsgemäß durch eine Drehmomentbegrenzungskupplung gelöst, die um eine Längsachse drehbar angeordnet ist. Die Drehmomentbegrenzungskupplung weist eine Kupplungsnabe auf, die umfangsverteilte Durchbrüche aufweist. Mitnehmerkörper sind parallel zur Längsachse verstellbar in den Durchbrüchen der Kupplungsnabe gehalten. Eine Kupplungshülse weist zu den Durchbrüchen korrespondierende erste Ausnehmungen auf. Eine Schaltscheibe ist zwischen einer Einkuppelposition und einer Auskuppelposition relativ zur Kupplungsnabe drehbar angeordnet. Die Schaltscheibe weist zu den Durchbrüchen korrespondierende zweite Ausnehmungen auf, in welche die Mitnehmerkörper in der Auskuppelposition eingreifen, wobei bei Überschreiten eines vorgegebenen Grenzdrehmoments durch eine Abrollbewegung der Mitnehmerkörper die Schaltscheibe aus der Einkuppelposition in die Auskuppelposition überführbar ist. Erste Federmittel beaufschlagen die Schaltscheibe axial, wobei bei Drehmomentübertragung zwischen der Kupplungsnabe und der Kupplungshülse die Mitnehmerkörper von der Schaltscheibe gegen die Kupplungshülse beaufschlagt sind und in der Einkuppelposition zur Drehmomentübertragung in den ersten Ausnehmungen gehalten sind. Zweite Federmittel beaufschlagen die Schaltscheibe in Umfangsrichtung zur Einnahme der Einkuppelposition. Die Drehmomentbegrenzungskupplung weist ferner zumindest ein Sperrelement auf, das zwischen einer Sperrposition und einer Löseposition verstellbar ist und in Richtung zur Sperrposition kraftbeaufschlagt ist, wobei das Sperrelement in der Auskuppelposition der Schaltscheibe in die Sperrposition überführbar ist, in der das Sperrelement in Umfangsrichtung gegen die Kupplungsnabe und gegen die Schaltscheibe abgestützt ist und die Schaltscheibe gegen Drehung relativ zur Kupplungsnabe sperrt. Das zumindest eine Sperrelement ist zusätzlich in der Einkuppelposition der Schaltscheibe in die Sperrposition überführbar, in der das Sperrelement in Umfangsrichtung gegen die Kupplungsnabe und gegen die Schaltscheibe abgestützt ist und die Schaltscheibe gegen Drehung relativ zur Kupplungsnabe sperrt.

Das zumindest eine Sperrelement hat demnach zwei Funktionen. Zum einen ist das Sperrelement in der Auskuppelposition der Schaltscheibe in die Sperrposition überführbar, in der das Sperrelement in Umfangsrichtung gegen die Kupplungsnabe und gegen die Schaltscheibe abgestützt ist und die Schaltscheibe gegen Drehung relativ zur Kupplungsnabe sperrt. Das Sperrelement wirkt somit als Einschaltsperre, mit der verhindert wird, dass die Drehmomentbegrenzungskupplung automatisch wieder einschaltet, wenn nach einer Überschreitung des Grenzdrehmoments das Drehmoment wieder unter das Grenzdrehmoment fällt.

Zum anderen ist das zumindest eine Sperrelement zusätzlich in der Einkuppelposition der Schaltscheibe in die Sperrposition überführbar, in der das Sperrelement in Umfangsrichtung gegen die Kupplungsnabe und gegen die Schaltscheibe abgestützt ist und die Schaltscheibe gegen Drehung relativ zur Kupplungsnabe sperrt. Damit wirkt das Sperrelement somit auch als Drehschwingungsbegrenzer, durch den verhindert wird, dass die Drehmomentbegrenzungskupplung beim Auftreten von Drehschwingungen abschaltet, ohne dass das Grenzdrehmoment überschritten wurde.

Besonders vorteilhaft wirkt sich die Unempfindlichkeit gegen Drehschwingungen beim Einsatz der Drehmomentbegrenzungskupplung in zwischen einem Schlepper und einem landwirtschaftlichen Gerät angeordneten Antriebssträngen aus, da die hier eingesetzten Gelenkwellen wegen des geringen zur Verfügung stehenden Freiraumes starken Abwinklungen unterworfen sind. In der Landtechnik werden vornehmlich Kreuzgelenkwellen mit zwei Kreuzgelenken eingesetzt. Wenn sich bei der Abwinklung der Gelenkwelle unterschiedliche Beugewinkel in den Kreuzgelenken einstellen, kommt es zu einer ungleichförmigen Drehbewegungsübertragung und somit zu Drehschwingungen. Diese können durch die erfindungsgemäße Drehmomentbegrenzungskupplung ohne ungewolltes Abschalten aufgenommen werden.

Der Einsatz der Drehmomentbegrenzungskupplung ist jedoch nicht auf den beschriebenen Anwendungsfall beschränkt, sondern empfiehlt sich überall dort, wo in vor Überlast zu schützenden Antriebssträngen Drehschwingungen auftreten können.

In einer Ausgestaltung der erfindungsgemäßen Drehmomentbegrenzungskupplung weist diese ein Freigabeelement auf, das zwischen einer Neutralstellung und einer Freigabestellung verstellbar ist, wobei durch Verstellen des Freigabeelements in die Freigabestellung das zumindest eine Sperrelement von dem Freigabeelement in die Löseposition überführt wird.

Mithilfe des Freigabeelements kann das zumindest eine Sperrelement insbesondere bei abgeschalteter Drehmomentbegrenzungskupplung aus der Sperrposition in die Löseposition überführt werden, um nach Auftreten einer Überlast und Abschalten der Drehmomentbegrenzungskupplung die Drehmomentbegrenzungskupplung wieder einzuschalten. Damit ist gewährleistet, dass ein Wiedereinschalten der Drehmomentbegrenzungskupplung nur durch aktives Einwirken eines Bedienpersonals möglich ist. Die Drehmomentbegrenzungskupplung kann nicht unbeabsichtigt und unkontrolliert selbständig wieder einschalten.

Es können mehrere Sperrelemente vorgesehen sein, die zudem über den Umfang verteilt, insbesondere gleichmäßig verteilt, angeordnet sein können. Hierdurch wird die Kraft zum Abstützen der Kupplungsnabe und der Schaltscheibe auf mehrere Sperrelemente verteilt. Die einzelnen Sperrelemente können entsprechend kleiner gestaltet werden, als bei nur einem Sperrelement.

Das zumindest eine Sperrelement kann in einer Ausführungsform in einer Führungsausnehmung der Kupplungsnabe verstellbar aufgenommen sein. Bei mehreren Sperrelementen sind entsprechend für jedes einzelne Sperrelement eine Führungsausnehmung vorgesehen. Das Sperrelement kann hierbei in der Führungsausnehmung verschiebbar, insbesondere parallel zur Längsachse axial verschiebbar, angeordnet sein. Denkbar ist jedoch auch eine Verstellung im Drehsinn.

In der Sperrposition kann das zumindest eine Sperrelement in eine Sperrausnehmung der Schaltscheibe eingreifen. Hierbei kann je Sperrelement eine erste Sperrausnehmung vorgesehen sein, in die das jeweilige Sperrelement in der Einkuppelposition der Schaltscheibe eingreift. Ferner kann je Sperrelement eine zweite Sperrausnehmung vorgesehen sein, in die das jeweilige Sperrelement in der Auskuppelposition der Schaltscheibe eingreift.

Das zumindest eine Sperrelement kann in einer Ausgestaltung der Drehmomentbegrenzungskupplung mit Umfangsspiel in der ersten Sperrausnehmung und/oder in der zweiten Sperrausnehmung sitzen. Hierzu kann die Breite der ersten Sperrausnehmung und/oder in der zweiten Sperrausnehmung in Umfangsrichtung größer sein als die Breite des mindestens einen Sperrelements in Umfangsrichtung. Das Umfangsspiel dient dazu, dass sich die Schaltscheibe bei Überschreiten eines Grenzdrehmoments schon beim Herausrollen der Mitnehmerkörper aus den ersten Ausnehmungen der Kupplungshülse besser verdrehen kann.

In einer Ausführungsform der Drehmomentbegrenzungskupplung ist das Freigabeelement ein Abdeckgehäuse der Drehmomentbegrenzungskupplung. Das Abdeckgehäuse dient dazu, zumindest die Schaltscheibe, das zumindest eine Sperrelement und zumindest teilweise die Kupplungsnabe und die Kupplungshülse nach außen abzudecken bzw. aufzunehmen. Hierbei kann das Abdeckgehäuse topfförmig gestaltet sein.

Das Freigabeelement kann relativ zur Kupplungsnabe axial verschiebbar oder verdrehbar angeordnet sein.

In Ausgestaltung der Drehmomentbegrenzungskupplung weist das Freigabeelement eine Anlagefläche auf, mit der das Freigabeelement beim Überführen von der Neutralstellung in die Freigabestellung das Sperrelement von der Sperrposition in die Löseposition überführt wird. Die Anlagefläche kann bei einem axial verschiebbaren Freigabeelement zum Beispiel als Konusfläche ausgebildet sein.

Ferner kann vorgesehen sein, dass das zumindest eine Sperrelement eine Anlauffläche aufweist, gegen die die Anlagefläche des Freigabeelements zum Überführen des zumindest einen Sperrelements von der Sperrposition in die Löseposition in Anlage ist. Die Anlagefläche kann als zur Längsachse schräg verlaufende Fläche ausgebildet sein.

Gemäß einer beispielhaften Ausführungsform ist das zumindest ein Sperrelement Bestandteil eines Sperrrings, der zwischen der Sperrposition und der Löseposition verstellbar ist. Somit können mehrere Sperrelemente Bestandteil eines einzigen Bauteils sein, um unter anderem die Montage zu vereinfachen.

Der Sperrring kann in einer Ausgestaltung eine Anlauffläche aufweisen, die die Anlauffläche des zumindest einen Sperrelements bildet. Bei mehreren Sperrelementen ist somit eine einzige Anlauffläche vorhanden, die die Anlaufflächen aller Sperrelemente bildet. Die Anlauffläche kann zum Beispiel als eine umlaufende Fläche gestaltet sein, die abschnittsweise Flächen der Sperrelemente bildet.

In Ausgestaltung kann vorgesehen sein, dass in der Auskuppelposition der Schaltscheibe die Mitnehmerkörper mit Umfangsspiel in den zweiten Ausnehmungen der Schaltscheibe aufgenommen sind.

Ein Ausführungsbeispiel wird im Folgenden anhand der Zeichnungen näher erläutert.

Hierin zeigen
- Figur 1: einen Längsschnitt durch eine erfindungsgemäße Drehmomentbegrenzungskupplung im eingekuppelten Zustand;
- Figur 2: einen Querschnitt der Drehmomentbegrenzungskupplung gemäß Figur 1 entlang der Schnittlinie II - II;
- Figur 3: eine Schnittdarstellung der Drehmomentbegrenzungskupplung im Bereich eines Sperrelements in seiner Sperrposition entlang der Schnittlinie III - III gemäß Figur 2;
- Figur 4: einen Querschnitt der Drehmomentbegrenzungskupplung gemäß Figur 1 entlang der Schnittlinie IV - IV;
- Figur 5: einen Längsschnitt der Drehmomentbegrenzungskupplung gemäß Figur 1 im ausgekuppelten Zustand;
- Figur 6: einen Querschnitt der Drehmomentbegrenzungskupplung gemäß Figur 5 entlang der Schnittlinie VI - VI;
- Figur 7: eine Schnittdarstellung der Drehmomentbegrenzungskupplung im Bereich eines Sperrelements in seiner Sperrposition entlang der Schnittlinie VII - VII gemäß Figur 6;
- Figur 8: einen Querschnitt der Drehmomentbegrenzungskupplung gemäß Figur 5 entlang der Schnittlinie VIII - VIII;
- Figur 9: einen Längsschnitt der Drehmomentbegrenzungskupplung gemäß Figur 1 im ausgekuppelten Zustand und mit dem Freigabeelement in seiner Löseposition; und
- Figur 10: eine Schnittdarstellung der Drehmomentbegrenzungskupplung im Bereich eines Sperrelements in seiner Löseposition gemäß Figur 7.

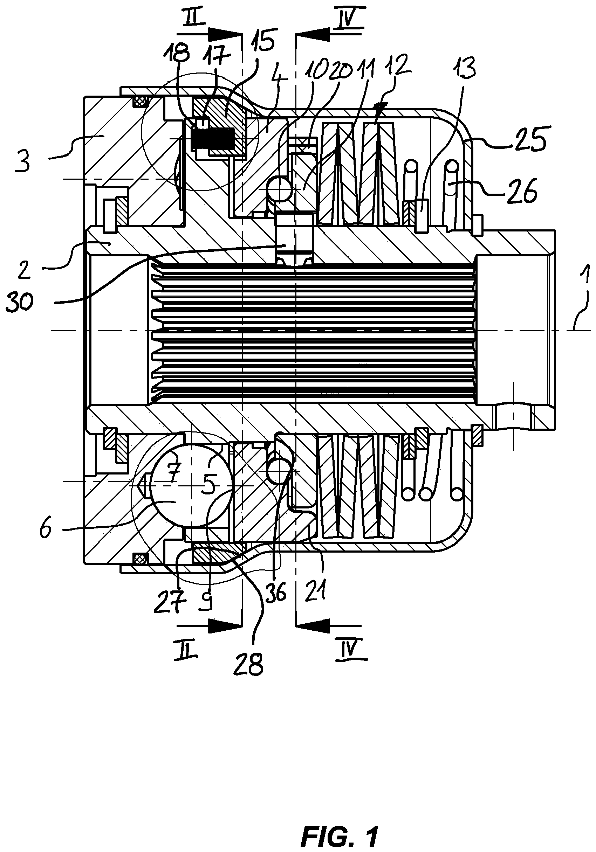

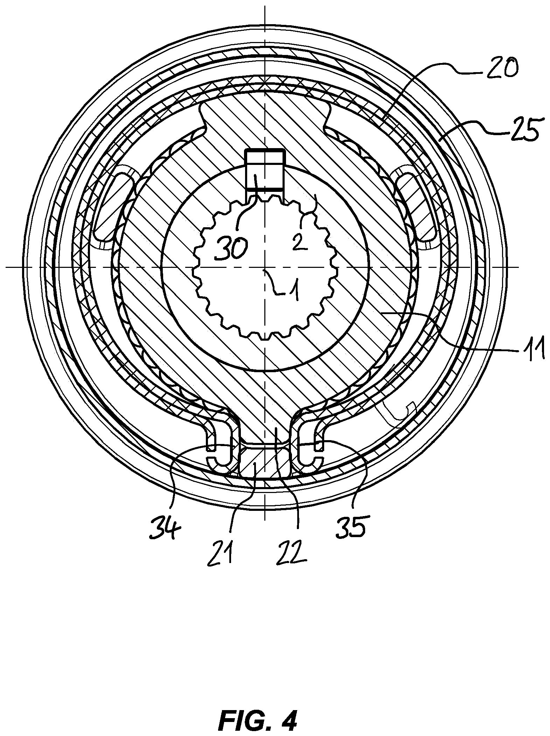

In Figuren 1 bis 4 ist eine erfindungsgemäße Drehmomentbegrenzungskupplung in einer drehmomentübertragenden Position dargestellt. Die Figuren werden im Folgenden zusammen beschrieben.

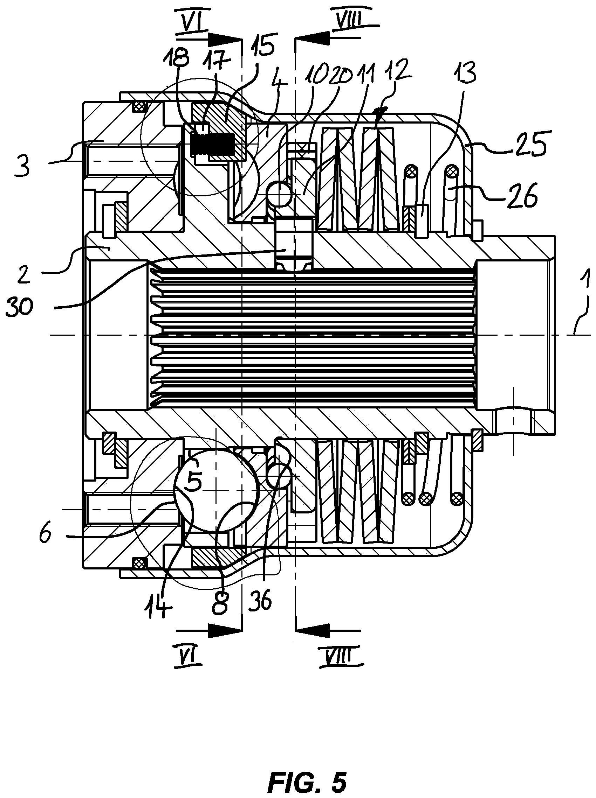

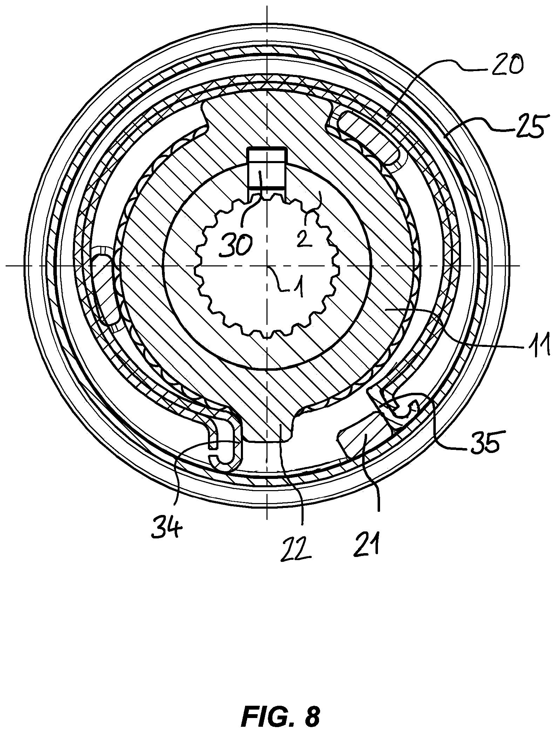

Die Drehmomentbegrenzungskupplung ist um eine Längsachse 1 drehbar angeordnet und weist eine Kupplungsnabe 2, eine Kupplungshülse 3 sowie eine Schaltscheibe 4 auf. Die Kupplungsnabe 2 weist umfangsverteilt Durchbrüche 5 auf, in denen als Wälzkörper wirkende Mitnehmerkörper 6 in Form von Kugeln parallel zur Längsachse 1 verstellbar gehalten sind. Die Mitnehmerkörper 6 können auch in anderer Form gestaltet sein, wie zum Beispiel in der Form von Rollen. Die Kupplungshülse 3 weist zu den Durchbrüchen 5 korrespondierende erste Ausnehmungen 7 auf. Die Schaltscheibe 4 weist zu den Durchbrüchen 5 korrespondierende zweite Ausnehmungen 8 auf. Die Schaltscheibe 4 ist um die Längsachse 1 relativ zur Kupplungsnabe 2 zwischen einer in den Figuren 1 bis 4 dargestellten Einkuppelposition und einer in den Figuren 5 bis 8 dargestellten Auskuppelposition drehbar angeordnet.

In der Einkuppelposition der Schaltscheibe 4 ragen die Mitnehmerkörper 6 in Richtung zur Kupplungshülse 3 aus den Durchbrüchen 5 heraus und greifen in die ersten Ausnehmungen 7 ein. Auf der der Kupplungshülse 3 abgewandten Seite ragen die Mitnehmerkörper 6 ebenfalls aus den Durchbrüchen 5 heraus und sind gegen zweite Laufrillen 9, die zwischen den zweiten Ausnehmungen 8 der Schaltscheibe 4 angeordnet sind, axial abgestützt. Alternativ kann die Schaltscheibe 4 auch ohne Laufrillen ausgebildet sein, so dass die Mitnehmerkörper 6 gegen eine Stirnfläche der Schaltscheibe abgestützt sind. Die ersten Ausnehmungen 7 der Kupplungshülse 3 und die zweiten Ausnehmungen 8 der Schaltscheibe 4 sind in der Einschaltposition bezüglich ihrer Drehposition versetzt zueinander angeordnet. Die Schaltscheibe 4 ist über ein Drucklager 10 gegen einen Druckring 11 axial abgestützt, wobei der Druckring 11 durch ein erstes Federelement in Form eines Tellerfederpakts 12 axial in Richtung zur Schaltscheibe 4 mit Kraft beaufschlagt ist. Das Tellerfederpaket 12 ist gegen einen Stützring 13 an der Kupplungsnabe 2 axial abgestützt. Somit sind die Mitnehmerkörper 6 in den ersten Ausnehmungen 7 gehalten. Hierbei ist der Druckring 11 gegen einen Absatz 36 der Kupplungsnabe 2 axial abgestützt. Solange kein Drehmoment übertragen wird, ist ein Schaltspiel zwischen den Mitnehmerkörpern 6 und der Schaltscheibe 4 vorgesehen. Anstelle des Tellerfederpakets 12 kann auch ein anderes geeignetes Federelement oder eine Federanordnung vorgesehen sein, wie zum Beispiel eine Schraubendruckfeder.

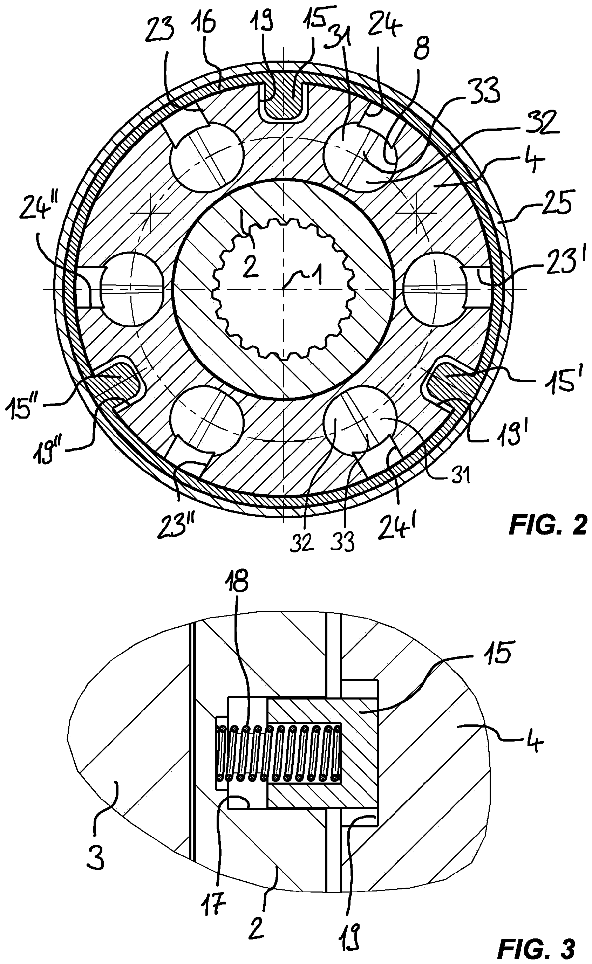

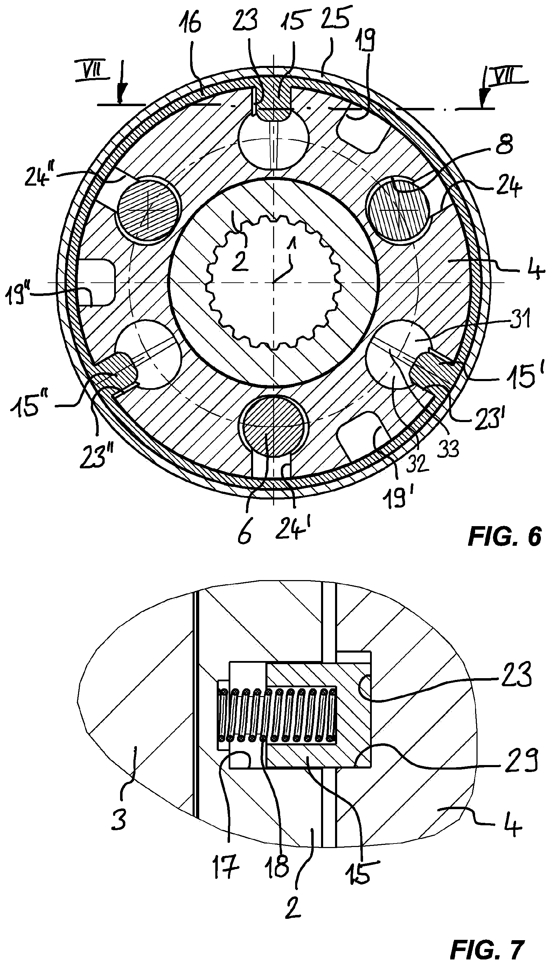

Bei Überschreiten eines Grenzdrehmoments werden die Mitnehmerkörper 6 aus den ersten Ausnehmungen 7 gegen die Federkraft des Tellerfederpakets 12 herausgedrückt, wobei dieses durch eine axiale Bewegung der Schaltscheibe 4 in Richtung zum Tellerfederpaket 12 zusammengedrückt wird. Die Mitnehmerkörper 6 rollen hierbei in den zweiten Laufrillen 9 der Schaltscheibe 4 sowie in ersten Laufrillen 14 (Figur 5) zwischen den ersten Ausnehmungen 7 der Kupplungshülse 3 ab, wobei aufgrund der Abrollbewegungen der Mitnehmerkörper 6 die Schaltscheibe 4 relativ zur Kupplungsnabe 2 um die Längsachse 1 entgegen der Kraft eines in Umfangsrichtung wirkenden zweiten Federelements in Form eines Spannklemmenpakets 20 gedreht wird. Alternativ kann die der Kupplungshülse 3 auch ohne Laufrillen ausgebildet sein, so dass die Mitnehmerkörper 6 gegen eine Stirnfläche der Kupplungshülse 3 abgestützt sind. Gemäß der Darstellungen in den Figuren 2 und 6 wird die Schaltscheibe im Uhrzeigersinn gedreht. Grundsätzlich kann vorgesehen sein, dass die Drehung auch in der anderen Richtung oder in beide Richtungen erfolgt.

In der Auskuppelposition der Schaltscheibe 4 greifen die Mitnehmerkörper 6 in die zweiten Ausnehmungen 8 ein, wobei die Schaltscheibe 4 aufgrund der Federkraft des ersten Federelements in Form des Tellerfederpakets 12 axial in Richtung zur Kupplungshülse 3 zurück bewegt wird. In dieser Schaltstellung ist die Drehmomentübertragung zwischen der Kupplungshülse 3 und der Kupplungsnabe 2 unterbrochen, so dass sich die Kupplungshülse 3 relativ zur Kupplungsnabe 2 dreht, wobei die Mitnehmerkörper 6 in den ersten Laufrillen 14 der Kupplungshülse 3 abrollen oder mit Axialspiel in den zweiten Ausnehmungen 8 unbewegt aufgenommen sein.

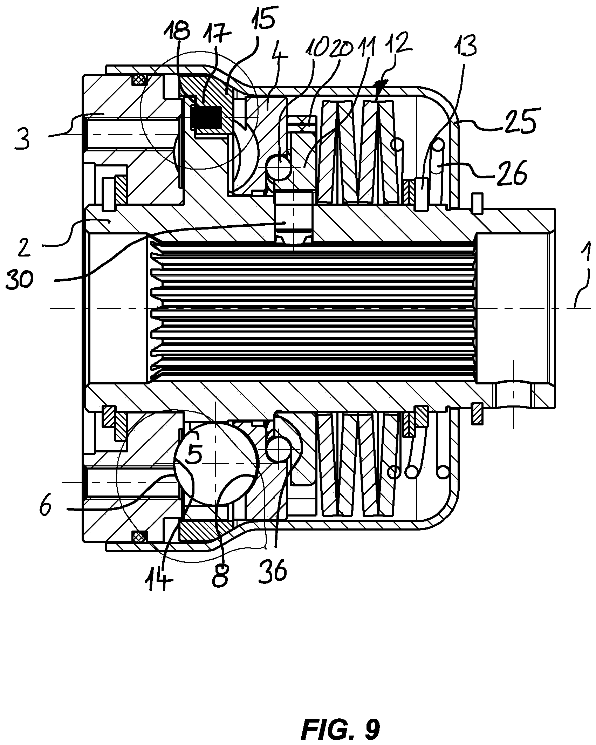

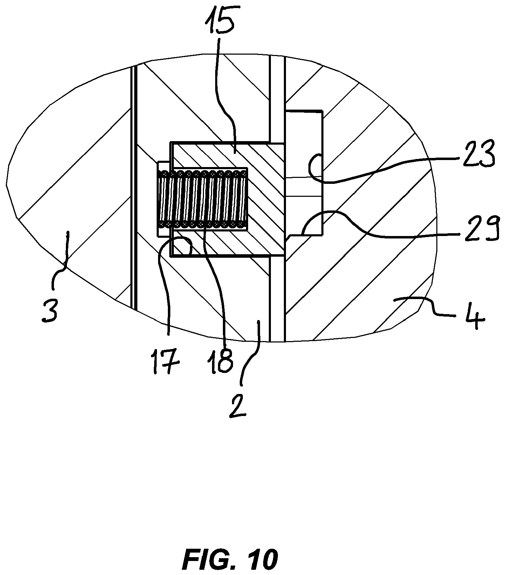

Insbesondere beim Einsatz der Drehmomentbegrenzungskupplung in zwischen einem Schlepper und einem landwirtschaftlichen Gerät angeordneten Kreuzgelenkwellen können Drehschwingungen auftreten, die dazu führen können, dass die Drehmomentbegrenzungskupplung bereits vor dem Überschreiten eines vorgegebenen Grenzdrehmomentes freischaltet. Um dies zu vermeiden, sind mehrere über den Umfang verteilt angeordnete Sperrelemente 15, 15', 15" vorgesehen. In dem gezeigten Ausführungsbeispiel sind drei Sperrelemente 15, 15', 15" angeordnet. Es ist jedoch auch eine andere Anzahl von Sperrelementen denkbar, wie zum Beispiel ein einziges Sperrelement. Die Sperrelemente 15, 15', 15" sind Bestandteil eines Sperrrings 16 und stehen radial nach innen vor. Der Sperrring 16 ist um die Kupplungsnabe 2 angeordnet, wobei die Sperrelemente 15, 15', 15" radial nach innen in Führungsausnehmungen 17, 17', 17" eingreifen. Die Sperrelemente 15, 15', 15" sind in diesen Führungsausnehmungen 17, 17', 17" axial parallel zur Längsachse 1 zwischen einer Sperrposition (Figuren 1, 3, 5 und 7) und einer Löseposition (Figuren 9 und 10) verstellbar. In dem gezeigten Ausführungsbeispiel sind die Sperrelemente 15, 15', 15" verschiebbar.

Die Führungsausnehmungen 17, 17', 17" öffnen sich in Richtung zur Schaltscheibe 4, wobei die Sperrelemente 15, 15', 15" jeweils durch eine Feder 18 in Richtung zur Schaltscheibe 4 mit Kraft beaufschlagt sind. In der Einkuppelposition greifen die Sperrelemente 15, 15', 15" jeweils in eine erste Sperrausnehmung 19, 19', 19" der Schaltscheibe 4 ein, wie dies insbesondere in Figur 3 zu erkennen ist. Hierdurch wird die Schaltscheibe 4 in ihrer Einkuppelposition gehalten.

Denkbar sind grundsätzlich auch andere Verstellrichtungen oder -bewegungen der Sperrelemente 15, 15', 15", wie zum Beispiel Drehbewegungen oder kombinierte Drehbewegungen und Verschiebebewegungen, vorausgesetzt, sie geben in der Löseposition die Schaltscheibe frei und sperren diese in der Sperrposition.

Die Sperrelemente 15, 15', 15" sind mit Umfangsspiel in den ersten Sperrausnehmungen 19, 19', 19" aufgenommen, sodass eine begrenzte Drehbewegung zwischen der Schaltscheibe 4 und der Kupplungsnabe 2 möglich ist. Hierzu sind die ersten Sperrausnehmungen 19, 19', 19" in Umfangsrichtung betrachtet breiter ausgestaltet als die Sperrelemente 15, 15', 15".

Darüber hinaus sind die Mitnehmerkörper 6 mit Umfangsspiel in den zweiten Ausnehmungen 8 der Schaltscheibe 4 aufgenommen. Alle zweiten Ausnehmungen 8 sind identisch ausgebildet und aus Gründen der Übersichtlichkeit mit demselben Bezugszeichen versehen. Um das Umfangsspiel zu gestalten, sind die zweiten Ausnehmungen 8 in Umfangsrichtung betrachtet breiter ausgestaltet, als diejenigen Abschnitte der Mitnehmerkörper 6, die in die zweiten Ausnehmungen 8 eintauchen. Hierdurch wird eine begrenzte Drehbewegung zwischen der Kupplungsnabe 2 und der Schaltscheibe 4 ermöglicht, ohne das die Schaltscheibe 4 bereits gegen die Federkraft des Tellerfederpakets 12 axial verschoben wird. Die zweiten Ausnehmungen 8 sind in zwei in Drehrichtung an den Enden der zweiten Ausnehmungen 8 angeordneten Endabschnitten 31, 32 sphärisch ausgebildet und an die sphärische Oberfläche der Mitnehmerkörper 6 angepasst, sodass sich die Mitnehmerkörper 6 in diesen Endabschnitten 31, 32 der zweiten Ausnehmungen 8 an diese anschmiegen. In einem mittleren Abschnitt 33 zwischen den beiden sphärischen Endabschnitten 31, 32 sind die zweiten Ausnehmungen 8 jeweils in Umfangsrichtung abgeflacht oder geradförmig gestaltet, sodass sich für die Mitnehmerkörper 6 ein Umfangsspiel innerhalb der zweiten Ausnehmungen 8 ergibt.

Die Schaltscheibe 4 weist einen axial über den Druckring 11 vorstehenden ersten Vorsprung 21 auf. Der Druckring 11 weist einen radial nach außen vorstehenden zweiten Vorsprung 22 auf. In der Einkuppelposition der Schaltscheibe 4 fluchten der erste Vorsprung 21 und der zweite Vorsprung 22 in radialer Richtung. Um den Druckring 11 ist das Spannklammerpaket 20 angeordnet, welches mit zwei in etwa radial verlaufenden Schenkeln 34, 35 ausgebildet ist, wobei jeder der beiden Schenkel 34, 35 gegen beide Vorsprünge 21, 22 in Umfangsrichtung abgestützt ist. Der Druckring 11 ist über eine Feder-Nut-Verbindung 30 drehfest auf der Kupplungsnabe 2 gehalten.

Beim Überführen der Schaltscheibe 4 von der Einkuppelposition in die Auskuppelposition wird die Schaltscheibe 4 relativ zur Kupplungsnabe 2 und dem mit dieser drehfest gehaltenen Druckring 11 verdreht. Hierbei stützt sind einer der Schenkel 34 in Umfangsrichtung gegen den zweiten Vorsprung 22 des Druckrings 11 und der andere der beiden Schenkel 35 in Umfangsrichtung gegen den ersten Vorsprung 21 der Schaltscheibe 4 ab. Somit wird das Spannklammerpaket 20 in Umfangsrichtung aufgeweitet und vorgespannt, sodass die Schaltscheibe 4 zur Einnahme der Einschaltposition in Umfangsrichtung mit Kraft beaufschlagt ist.

Anstelle des Spannklammerpakets 20 sind auch andere Federmittel denkbar, wie zum Beispiel in Umfangsrichtung wirkende Schraubenfedern oder ähnliches.

Bei Unterschreitung des Grenzdrehmoments würden aufgrund der zur Einnahme der Einschaltposition beaufschlagten Schaltscheibe 4 die Mitnehmerkörper 6 von der Schaltscheibe 4 in die ersten Ausnehmungen 7 der Kupplungshülse 3 gedrückt. Wenn die Drehzahldifferenz zwischen der Kupplungsnabe 2 und der Kupplungshülse 3 einen bestimmten Wert unterschreitet, wird die Schaltscheibe 4 beim Überlaufen der Mitnehmerkörper 6 über die ersten Ausnehmungen 7 in die Einkuppelposition zurückgedreht. Ist das Grenzdrehmoment dann ausreichend unterschritten, würde die Schaltscheibe 4 in der Einkuppelposition verbleiben und die Drehmomentbegrenzungskupplung entsprechend eingeschaltet bleiben.

Um dieses automatische Wiedereinschalten zu vermeiden, sind in der Schaltscheibe 4 zweite Sperrausnehmungen 23, 23', 23", 24, 24', 24" angeordnet. In dem gezeigten Ausführungsbeispiel greifen die Sperrelemente 15, 15', 15" in ihrer Sperrposition und in der Auskuppelposition der Schaltscheibe 4 in zweite Sperrausnehmungen 23, 23', 23" ein, die in der Darstellung der Figur 6 jeweils gegen den Urzeigersinn benachbart zu einer der ersten Sperrausnehmungen 19, 19' ,19" angeordnet ist. Bei Abschaltung in der anderen Drehrichtung würden die Sperrelemente 15, 15', 15" in zweite Sperrausnehmungen 24, 24', 24" eingreifen, die in der Darstellung der Figur 6 jeweils im Urzeigersinn benachbart zu einer der ersten Sperrausnehmungen 19, 19' ,19" angeordnet ist.

Somit ist die Schaltscheibe 4 gegen die Kraft des Spannklemmpakets 20 gegen die Sperrelemente 19, 19', 19" in Umfangsrichtung abgestützt (Figur 7) und in der Auskuppelposition gehalten.

Zum Freigeben der Sperrelemente 15, 15', 15", also zum Überführen der Sperrelemente 15, 15', 15" aus der Sperrposition in die Löseposition, ist ein Freigabeelement 25 vorgesehen. Das Freigabeelement 25 ist in der gezeigten Ausführungsform durch ein Abdeckgehäuse dargestellt, das das Tellerfederpaket 12, den Druckring 11, die Schaltscheibe 4 und teilweise die Kupplungsnabe 2 sowie teilweise die Kupplungshülse 3 aufnimmt. Das Freigabeelement 25 kann jedoch alternativ auch als separates Bauteil ausgeführt sein.

Das Freigabeelement 25 ist gegen die Kraft einer Druckfeder 26 zwischen einer Neutralstellung und einer Freigabestellung auf der Kupplungsnabe 2 verschiebbar geführt. Denkbar ist auch eine andere Verstellbarkeit des Freigabeelements 25, wie zum Beispiel die Drehbarkeit des Freigabeelements 25. Ferner kann anstelle einer Druckfeder ein anderes Federelement eingesetzt werden.

Das Freigabeelement 25 weist eine Anlagefläche 27 auf, mit der das Freigabeelement 25 beim Überführen von der Neutralstellung in die Freigabestellung die Sperrelemente 15, 15', 15" von der Sperrposition in die Löseposition überführt. Die Anlagefläche 27 ist eine Innenfläche des aus Blech gefertigten Abdeckgehäuses und ist konusförmig gestaltet, wobei sich der Konuswinkel der konusförmigen Anlagefläche 27 in Richtung zum Sperrring 16 hin öffnet. Denkbar ist auch eine andere Gestaltung der Anlagefläche 27.

Die Anlagefläche 27 wirkt hierbei mit Anlaufflächen 28 der Sperrelemente 15, 15', 15" zusammen, wobei die Anlaufflächen 28 am Sperrring 16 derart ineinander in Umfangsrichtung übergehen, dass diese eine zusammenhängende Anlauffläche 28 bilden. Die Anlauffläche 28 ist ebenfalls konusförmig gestaltet und weist denselben Konuswinkel auf, wie die konusförmige Anlagefläche 27. Denkbar ist auch eine andere Gestaltung der Anlagefläche 27 und Anlauffläche 28.

In der Auskuppelposition der Schaltscheibe 4 und in der Sperrstellung der Sperrelemente 15, 15', 15" werden die Sperrelemente 15, 15', 15" jeweils gegen eine Sperrfläche 29 der jeweiligen zweiten Sperrausnehmung 23, 23', 23", 24, 24', 24" gedrückt (Figur 7). In dieser Stellung der Schaltscheibe 4 befinden sich die Mitnehmerkörper 6 zumindest in etwa in der Mitte der zweiten Ausnehmungen 8 (Figur 6). Beim Überführen der Sperrelemente 15, 15', 15" in die Löseposition wird die Schaltscheibe 4 daher aufgrund des Umfangsspiels zwischen den Mitnehmerkörpern 6 innerhalb der zweiten Ausnehmungen 8 durch die Kraft des Spannklemmpakets 20 geringfügig gedreht. Hierdurch fluchten die Sperrelemente 15, 15', 15" in Umfangsrichtung nicht mehr mit den zweiten Sperrausnehmungen 23, 23', 23", 24, 24', 24" (Figur 10). Beim Überführen des Freigabeelements 25 zurück in die Neutralstellung greifen die Sperrelemente 15, 15', 15" daher nicht wieder in die zweiten Sperrausnehmungen 23, 23', 23", 24, 24', 24" ein. Hierdurch ist sichergestellt, dass bei einem kurzzeitigen Betätigen des Freigabeelements 25 durch Bedienpersonal ein erneutes Sperren der Kupplungsscheibe vermieden wird. Da die Drehmomentbegrenzungskupplung zum Betätigen des Freigabeelements 25 stillgesetzt wird, kann nun die Drehmomentbegrenzungskupplung beim erneuten Anfahren des Antriebsstrangs, in dem die Drehmomentbegrenzungskupplung angeordnet ist, wieder einschalten.

### Bezugszeichenliste

- 1: Längsachse
- 2: Kupplungsnabe
- 3: Kupplungshülse
- 4: Schaltscheibe
- 5: Durchbruch
- 6: Mitnehmerkörper
- 7: erste Ausnehmung
- 8: zweite Ausnehmung
- 9: zweite Laufrille
- 10: Drucklager
- 11: Druckring
- 12: Tellerfederpaket
- 13: Stützring
- 14: erste Laufrille
- 15, 15', 15": Sperrelement
- 16: Sperrring
- 17, 17', 17": Führungsausnehmung
- 18: Feder
- 19, 19', 19": erste Sperrausnehmung
- 20: Feder (Spannklemmpaket)
- 21: erster Vorsprung
- 22: zweiter Vorsprung
- 23, 23', 23": zweite Sperrausnehmung
- 24, 24', 24": zweite Sperrausnehmung
- 25: Freigabeelement / Kupplungsgehäuse
- 26: Druckfrder
- 27: Anlagefläche
- 28: Anlauffläche
- 29: Sperrfläche
- 30: Feder-Nut-Verbindung
- 31: Endabschnitt
- 32: Endabschnitt
- 33: mittlerer Abschnitt
- 34: Schenkel
- 35: Schenkel
- 36: Absatz

## Patentansprüche

1. Drehmomentbegrenzungskupplung, die um eine Längsachse (1) drehbar angeordnet ist und Folgendes aufweist:
eine Kupplungsnabe (2), die umfangsverteilte Durchbrüche (5) aufweist, Mitnehmerkörper (6), die parallel zur Längsachse (1) verstellbar in den Durchbrüchen (5) der Kupplungsnabe (2) gehalten sind,
eine Kupplungshülse (3), die zu den Durchbrüchen (5) korrespondierende erste Ausnehmungen (7) aufweist,
eine Schaltscheibe (4), die zwischen einer Einkuppelposition und einer Auskuppelposition relativ zur Kupplungsnabe (2) drehbar angeordnet ist, und die zu den Durchbrüchen (5) korrespondierende zweite Ausnehmungen (8) aufweist, in welche die Mitnehmerkörper (6) in der Auskuppelposition eingreifen, wobei bei Überschreiten eines vorgegebenen Grenzdrehmoments durch eine Abrollbewegung der Mitnehmerkörper (6) die Schaltscheibe (4) aus der Einkuppelposition in die Auskuppelposition überführbar ist,
ein erstes Federelement (12), das die Schaltscheibe (4) axial beaufschlagt, wobei bei Drehmomentübertragung zwischen der Kupplungsnabe (2) und der Kupplungshülse (3) die Mitnehmerkörper (6) von der Schaltscheibe (4) gegen die Kupplungshülse (3) beaufschlagt sind und in der Einkuppelposition zur Drehmomentübertragung in den ersten Ausnehmungen (7) gehalten sind,
ein zweites Federelement (20), das die Schaltscheibe (4) in Umfangsrichtung zur Einnahme der Einkuppelposition beaufschlagt, und
zumindest ein Sperrelement (15, 15', 15"), das zwischen einer Sperrposition und einer Löseposition verstellbar ist,
**dadurch gekennzeichnet,**
**dass** das Sperrelement (15, 15', 15") in Richtung zur Sperrposition kraftbeaufschlagt ist, wobei das Sperrelement (15, 15', 15") in der Auskuppelposition der Schaltscheibe (4) in die Sperrposition überführbar ist, in der das Sperrelement (15, 15', 15") in Umfangsrichtung gegen die Kupplungsnabe (2) und gegen die Schaltscheibe (4) abgestützt ist und die Schaltscheibe (4) gegen Drehung relativ zur Kupplungsnabe (2) sperrt, und
**dass** das zumindest eine Sperrelement (15, 15', 15") zusätzlich in der Einkuppelposition der Schaltscheibe (4) in die Sperrposition überführbar ist, in der das Sperrelement (15, 15', 15") in Umfangsrichtung gegen die Kupplungsnabe (2) und gegen die Schaltscheibe (4) abgestützt ist und die Schaltscheibe (4) gegen Drehung relativ zur Kupplungsnabe (2) sperrt.

2. Drehmomentbegrenzungskupplung nach Anspruch 1,
**dadurch gekennzeichnet,**
**dass** die Drehmomentbegrenzungskupplung ein Freigabeelement (25) aufweist, das zwischen einer Neutralstellung und einer Freigabestellung verstellbar ist, wobei durch Verstellen des Freigabeelements (25) in die Freigabestellung das zumindest eine Sperrelement (15, 15', 15") von dem Freigabeelement (25) in die Löseposition überführt wird.

3. Drehmomentbegrenzungskupplung nach einem der Ansprüche 1 oder 2,
**dadurch gekennzeichnet,**
**dass** mehrere Sperrelemente (15, 15', 15") über den Umfang verteilt angeordnet sind.

4. Drehmomentbegrenzungskupplung nach einem der Ansprüche 1 bis 3,
**dadurch gekennzeichnet,**
**dass** das zumindest eine Sperrelement (15, 15', 15") in einer Führungsausnehmung (17, 17', 17") der Kupplungsnabe (2) verstellbar aufgenommen ist.

5. Drehmomentbegrenzungskupplung nach Anspruch 4,
**dadurch gekennzeichnet,**
**dass** das zumindest eine Sperrelement (15, 15', 15") in der Führungsausnehmung (17, 17', 17") axial verschiebbar ist.

6. Drehmomentbegrenzungskupplung nach einem der Ansprüche 1 bis 5,
**dadurch gekennzeichnet,**
**dass** das zumindest eine Sperrelement (15, 15', 15") in der Sperrposition, und in der Einkuppelposition der Schaltscheibe (4), in eine erste Sperrausnehmung (19, 19', 19") der Schaltscheibe (4) eingreift.

7. Drehmomentbegrenzungskupplung nach einem der Ansprüche 1 bis 6,
**dadurch gekennzeichnet,**
**dass** das zumindest eine Sperrelement (15, 15', 15") in der Sperrposition, und in der Auskuppelposition der Schaltscheibe (4), in eine zweite Sperrausnehmung (23, 23', 23", 24, 24', 24") der Schaltscheibe (4) eingreift.

8. Drehmomentbegrenzungskupplung nach einem der Ansprüche 1 bis 7,
**dadurch gekennzeichnet,**
**dass** das Freigabeelement (25) ein Abdeckgehäuse der Drehmomentbegrenzungskupplung ist.

9. Drehmomentbegrenzungskupplung nach einem der Ansprüche 1 bis 8,
**dadurch gekennzeichnet,**
**dass** das Freigabeelement (25) axial verschiebbar angeordnet ist.

10. Drehmomentbegrenzungskupplung nach einem der Ansprüche 1 bis 9,
**dadurch gekennzeichnet,**
**dass** das Freigabeelement (25) eine Anlagefläche (27) aufweist, mit der das Freigabeelement (25) beim Überführen von der Neutralstellung in die Freigabestellung das Sperrelement (15, 15', 15") von der Sperrposition in die Löseposition überführt.

11. Drehmomentbegrenzungskupplung nach Anspruch 10,
**dadurch gekennzeichnet,**
**dass** das zumindest eine Sperrelement (15, 15', 15") eine Anlauffläche (28) aufweist, gegen die die Anlagefläche (27) des Freigabeelements (25) zum Überführen des zumindest einen Sperrelements (15, 15', 15") von der Sperrposition in die Löseposition in Anlage ist.

12. Drehmomentbegrenzungskupplung nach einem der Ansprüche 1 bis 11,
**dadurch gekennzeichnet,**
**dass** das zumindest eine Sperrelement (15, 15', 15") Bestandteil eines Sperrrings (16) ist, der zwischen der Sperrposition und der Löseposition verstellbar ist.

13. Drehmomentbegrenzungskupplung nach Anspruch 12,
**dadurch gekennzeichnet,**
**dass** der Sperrring (16) eine Anlauffläche (28) aufweist, die die Anlauffläche des zumindest einen Sperrelements (15, 15', 15") bildet.

14. Drehmomentbegrenzungskupplung nach einem der Ansprüche 1 bis 13,
**dadurch gekennzeichnet,**
**dass** in der Auskuppelposition der Schaltscheibe (4) die Mitnehmerkörper (6) mit Umfangsspiel in den zweiten Ausnehmungen (8) der Schaltscheibe (4) aufgenommen sind.

## Claims

1. Torque limiting coupling, arranged rotatably around a longitudinal axis (1), comprising:
a coupling hub (2) having circumferentially distributed through-openings (5),
driving members (6) arranged displaceable parallel to the longitudinal axis (1) in the through-openings (5) of the coupling hub (2),
a coupling sleeve (3) having first recesses (7) corresponding to the through-openings (5),
a switching disc (4) that is rotatable relative to the coupling hub (2) between a coupling position and a decoupling position and that has second recesses (8) corresponding to the through-openings (5), wherein the driving members (6) engage in the decoupling position in the second recesses, and when a predetermined threshold torque is exceeded the switching disc (4) is transferable from the coupling position into the decoupling position by a rolling movement of the driving members (6),
a first spring element (12) axially biasing the switching disc (4), wherein during the torque transmission between the coupling hub (2) and the coupling sleeve (3) the driving members (6) are biased by the switching disc (4) against the coupling sleeve (3) and wherein in the coupling position the driving members are held in the first recesses (7) for torque transmission,
a second spring element (20) biasing the switching disc (4) in a circumferential direction towards the coupling position, and
at least one locking element (15, 15', 15") that is displaceable between a locking position and an unlocking position,
**characterized in**
**that** the locking element (15, 15', 15") is biased towards the locking position, wherein the locking element (15, 15', 15") is transferable into the locking position in the decoupling position of the switching disc (4), in which locking position the locking element (15, 15', 15") is supported in the circumferential direction against the coupling hub (2) and against the switching disc (4) and in which the switching disc (4) is locked against rotation relative to the coupling hub (2), and
**that** the at least one locking element (15, 15', 15") is further transferable into the locking position in the coupling position of the switching disc (4), in which locking position the locking element (15, 15', 15") is supported in the circumferential direction against the coupling hub (2) and against the switching disc (4) and in which the switching disc (4) is locked against rotation relative to the coupling hub (2).

2. Torque limiting coupling according to claim 1,
**characterized in**
**that** the torque limiting coupling further comprises a release element (25) that is displaceable between a neutral position and a release position, wherein by displacing the release element (25) into the release position the at least one locking element (15, 15', 15") is transferred by the release element (25) into the release position.

3. Torque limiting coupling according to anyone of claims 1 or 2,
**characterized in**
**that** several locking elements (15, 15', 15") are arranged distributed over the circumference.

4. Torque limiting coupling according to anyone of claims 1 or 3,
**characterized in**
**that** the at least one locking element (15, 15', 15") is accommodated displaceably in a guide recess (17, 17', 17") of the coupling hub (2).

5. Torque limiting coupling according to claim 4,
**characterized in**
**that** the at least one locking element (15, 15', 15") is axially displaceable in the guide recess (17, 17', 17").

6. Torque limiting coupling according to anyone of claims 1 to 5,
**characterized in**
**That**, in the locking position, the at least one locking element (15, 15', 15") engages in a first locking recess (19, 19', 19") of the switching disc (4) in the coupling position of the switching disc (4).

7. Torque limiting coupling according to anyone of claims 1 to 6,
**characterized in**
**that**, in the locking position, the at least one locking element (15, 15', 15") engages in a second locking recess (23, 23', 23", 24, 24', 24") of the switching disc (4) in the decoupling position of the switching disc (4).

8. Torque limiting coupling according to anyone of claims 1 to 7,
**characterized in**
**that** the release element (25) is a covering housing of the torque limiting coupling.

9. Torque limiting coupling according to anyone of claims 1 to 8,
**characterized in**
**that** the release element (25) is axially displaceable.

10. Torque limiting coupling according to anyone of claims 1 to 9,
**characterized in**
**that** the release element (25) has an abutment face (27) with which release element (25) transfers the locking element (15, 15', 15") from the locking position into the unlocking position during the transfer from the neutral position into the release position.

11. Torque limiting coupling according to claim 10,
**characterized in**
**that** the at least one locking element (15, 15', 15") has a stop face (28), against which the abutment face (27) of the release element (25) is in contact for transferring the at least one locking element (15, 15', 15") from the locking position into the unlocking position.

12. Torque limiting coupling according to anyone of claims 1 to 11,
**characterized in**
**that** the at least one locking element (15, 15', 15") is part of a locking ring (16), which is displaceable between the locking position and the unlocking position.

13. Torque limiting coupling according to claim 12,
**characterized in**
**that** the locking ring (16) has a stop face (28), which forms the stop face of the at least one locking element (15, 15', 15").

14. Torque limiting coupling according to anyone of claims 1 to 13,
**characterized in**
**that** in the decoupling position of the switching disc (4) the driving members (6) are accommodated with a circumferential clearance in the second recesses (8) of the switching disc (4).

## Revendications

1. Embrayage limiteur de couple, qui est placé en étant rotatif autour d'un axe longitudinal (1) et comporte ce qui suit :
un moyeu d'embrayage (2), qui comporte des ajours (5) distribués sur la périphérie,
des organes d'entraînement (6), qui sont maintenus en étant réglables à la parallèle de l'axe longitudinal (1) dans les ajours (5) du moyeu d'embrayage (2),
une douille d'accouplement (3), qui comporte des premiers évidements (7) correspondants aux ajours (5),
un disque de commutation (4), qui est placé en étant rotatif dans une position d'embrayage et une position de débrayage par rapport au moyeu d'embrayage (2) et qui comporte des deuxièmes évidements (8) correspondant aux ajours (5), dans lesquels les organes d'entraînement (6) s'engagent dans la position de débrayage, lors d'un dépassement d'un couple limite prédéfini, par un mouvement de roulement des organes d'entraînement (6), le disque de commutation (4) étant susceptible de passer d'une position d'embrayage dans la position de débrayage,
un premier élément à ressort (12), qui contraint en direction axiale le disque de commutation (4), lors d'une transmission de couple entre le moyeu d'embrayage (2) et la douille d'accouplement (3), les organes d'entraînement (6) étant contraints par le disque de commutation (4) contre la douille d'accouplement (3) et dans la position d'embrayage, étant maintenus dans les premiers évidements (7) pour la transmission de couple,
un deuxième élément à ressort (20), qui contraint le disque de commutation (4) dans la direction périphérique pour adopter la position d'embrayage et
au moins un élément de blocage (15, 15', 15''), qui est réglable entre une position de blocage et une position de désolidarisation, **caractérisé en ce que** l'élément de blocage (15, 15', 15") est contraint par une force dans la direction de la position de blocage,
dans la position de débrayage du disque de commutation (4), l'élément de blocage (15, 15', 15") étant susceptible de passer dans la position de blocage dans laquelle l'élément de blocage (15, 15', 15") s'appuie en direction périphérique contre le moyeu d'embrayage (2) et contre le disque de commutation (4) et bloque le disque de commutation (4) en rotation en rapport au moyeu d'embrayage (2),
dans la position d'embrayage du disque de commutation (4), l'au moins un élément de blocage (15, 15', 15") étant susceptible de passer additionnellement dans la position de blocage dans laquelle l'élément de blocage (15, 15', 15") s'appuie dans la direction périphérique contre le moyeu d'embrayage (2) et contre le disque de commutation (4) et bloque le disque de commutation (4) en rotation par rapport au moyeu d'embrayage (2).

2. Embrayage limiteur de couple selon la revendication 1, **caractérisé en ce que**,
l'embrayage limiteur de couple comporte un élément de libération (25) qui est réglable entre une position neutre et une position de libération, par réglage de l'élément de libération (25) dans la position de libération, l'au moins un élément de blocage (15, 15', 15") étant passé par l'élément de libération (25) dans la position de désolidarisation.

3. Embrayage limiteur de couple selon l'une quelconque des revendications 1 ou 2, **caractérisé en ce que**
plusieurs éléments de blocage (15, 15', 15") sont placés en distribution sur la périphérie.

4. Embrayage limiteur de couple selon l'une quelconque des revendications 1 à 3, **caractérisé en ce que**
l'au moins un élément de blocage (15, 15', 15'') est reçu de manière réglable dans un évidement de guidage (17, 17', 17") du moyeu d'embrayage (2).

5. Embrayage limiteur de couple selon la revendication 4, **caractérisé en ce que**
l'au moins un élément de blocage (15, 15', 15'') est déplaçable en direction axiale dans l'évidement de guidage (17, 17', 17").

6. Embrayage limiteur de couple selon l'une quelconque des revendications 1 à 5, **caractérisé en ce que**
dans la position de blocage, et dans la position d'embrayage du disque de commutation (4), l'au moins un élément de blocage (15, 15', 15") s'engage dans un premier évidement de blocage (19, 19', 19") du disque de commutation (4).

7. Embrayage limiteur de couple selon l'une quelconque des revendications 1 à 6, **caractérisé en ce que**
dans la position de blocage, et dans la position de débrayage du disque de commutation (4), l'au moins un élément de blocage (15, 15', 15") s'engage dans un deuxième élément de blocage (23, 23', 23", 24, 24', 24") du disque de commutation (4).

8. Embrayage limiteur de couple selon l'une quelconque des revendications 1 à 7, **caractérisé en ce que**
l'élément de libération (25) est un boîtier de recouvrement de l'embrayage limiteur de couple.

9. Embrayage limiteur de couple selon l'une quelconque des revendications 1 à 8, **caractérisé en ce que**
l'élément de libération (25) est placé en étant déplaçable en direction axiale.

10. Embrayage limiteur de couple selon l'une quelconque des revendications 1 à 9, **caractérisé en ce que**
l'élément de libération (25) comporte une surface d'appui (27) par laquelle, lors du passage de la position neutre dans la position de libération, l'élément de libération (25) passe l'élément de blocage (15, 15', 15") de la position de blocage dans la position de désolidarisation.

11. Embrayage limiteur de couple selon la revendication 10, **caractérisé en ce que**
l'au moins un élément de blocage (15, 15', 15") comporte une surface formant rampe (28) contre laquelle la surface d'appui (27) de l'élément de libération (25) est en appui pour faire passer l'au moins un élément de blocage (15, 15', 15'') de la position de blocage dans la position de désolidarisation.

12. Embrayage limiteur de couple selon l'une quelconque des revendications 1 à 11, **caractérisé en ce que**,
l'au moins un élément de blocage (15, 15', 15") est une partie intégrante d'une bague de blocage (16) qui est réglable entre la position de blocage et la position de désolidarisation.

13. Embrayage limiteur de couple selon la revendication 12, **caractérisé en ce que**
la bague de blocage (16) comporte une surface formant rampe (28) qui forme la surface formant rampe de l'au moins un élément de blocage (15, 15', 15").

14. Embrayage limiteur de couple selon l'une quelconque des revendications 1 à 13, **caractérisé en ce que**,
dans la position de débrayage du disque de commutation (4), les organes d'entraînement (6) sont reçus avec un jeu périphérique dans les deuxièmes évidements (8) du disque de commutation (4).
